# EUROPEAN PATENT APPLICATION

(11) **EP 4 303 258 A1**
(43) Date of publication of application: **10.01.2024**
(21) Application number: 22763179.3
(22) Date of filing: 28.02.2022
(51) Int. Cl.: C08K 5/5465, C08L 33/08, C08L 33/12, C09J 133/08, C09J 133/12, C09J 171/02, C08L 71/02

(54) **CURABLE COMPOSITION**

(30) Priority: 04.03.2021 CN 202110241690
(71) Applicant: Kaneka Corporation, Osaka-shi, Osaka 530-8288 (JP)
(72) Inventor: HE, Yuku, Guagzhou, Guangdong 510620 (CN)
(74) Representative: Vossius & Partner Patentanwälte Rechtsanwälte mbB
(86) International application number: PCT/JP2022/008231
(87) International publication number: WO 2022/186123

(57) **Abstract**

An embodiment of the present invention relates to a curable composition containing (A) a polyoxyalkylene-based polymer having a silicon-containing reactive group, (B) a (meth)acrylic ester-based polymer having a trialkoxysilyl group, and (C) a specific silane compound having a guanidine group. Because a nonorganotin-based catalyst is used for the curable composition of an embodiment of the present invention, the curable composition has excellent miscibility among the components, tends less to suffer a defect caused by transfer of a catalyst, is excellent in curability and adhesiveness, and, when cured, yields a cured product having excellent mechanical performance.

## Description

### Technical Field

The present invention relates to a curable composition, in particular to a curable composition containing: a polyoxyalkylene-based polymer having a silicon-containing reactive group; a (meth)acrylic ester-based polymer having a trialkoxysilyl group; and a silane compound having a guanidine group.

### Background Art

It is known that an organic polymer having at least one silicon-containing reactive group per molecule has a curing reaction with moisture (moisture in air) even at room temperature, and therefore a rubbery cured product having excellent mechanical performance can be obtained from the organic polymer. Such polymers are already disclosed in the literature (Patent Literatures 1 to 4) and are used widely in applications such as industrial production, sealing materials, adhesive agents, and coating materials.

### Citation List

### [Patent Literature]

[Patent Literature 1]
   Japanese Patent Application Publication, Tokukaisho, No. 52-73998 A
[Patent Literature 2]
   Japanese Patent Application Publication, Tokukaihei, No. 11-130931 A
[Patent Literature 3]
   WO 2016/002907 A
[Patent Literature 4]
   WO 2015/158864 A

### Summary of Invention

### Technical Problem

Ordinarily, an organotin-based compound is used as a curing catalyst for a curable composition containing the above-described organic polymer having a silicon-containing reactive group. Depending on the application of the curable composition, the use of such a curable composition may be limited by laws of the European Union (EU) and other countries. As such, there are cases where it is necessary to minimize the amount of an organotin-based compound used or to use no organotin-based compound. However, a problem can occur even in a case where a non-organotin-based compound is used as a curing catalyst. For example, in a case where an organotitanate ester, an organodilconate ester, an organoaluminate ester, or the like is used as an alternative metal-based catalyst, the catalytic activity is often low in silanol condensation, and gelation can also occur undesirably. It is also expected that carboxylic acids, amine compounds, amidine compounds, and the like, which are metal-free catalysts, will not affect the environment very much. However, there are also many catalysts with low miscibility in the composition, such as 1,8-diazabicyclo[5.4.0]undeca-7-en (DBU). As such, such a catalyst is more prone to transfer, and as a result, can easily cause separation, leaching, or contamination of the base material. Patent Literature 4 discloses that the problem of miscibility is improved by using silane having an amidine group or a guanidine group as a catalyst.

As a result of research, the inventors of the present invention found that the catalytic activity of a catalyst varies widely among different types of organic polymers having a silicon-containing reactive group. In the case of a sealant or an adhesive agent containing a polymer having a silicon-containing reactive group, the above-described known technology still has room for improvement in terms of, for example, not only improving the curability and adhesiveness of the curable composition but also reducing transfer of a nonorganotin-based catalyst to thereby ensure mechanical strength of a cured product.

A main object of the present invention is to provide a curable composition in which a nonorganotin-based catalyst is used, which has excellent curability and adhesiveness, and which makes it possible to ensure mechanical performance of a cured product. The nonorganotin-based catalyst has good miscibility in the curable composition, and is less prone to precipitation defects caused by transfer.

Another object of the present invention is to provide a cured product based on the curable composition.

Another object of the present invention is to provide an adhesive agent based on the curable composition.

Another object of the present invention is to provide a sealing material based on the curable composition.

### Solution to Problem

The present invention encompasses the following technical ideas.

<1> A curable composition, containing:
   (A) a polyoxyalkylene-based polymer having a silicon-containing reactive group;
   (B) a (meth)acrylic ester-based polymer having a trialkoxysilyl group; and
   (C) a catalyst represented by the following general formula (1): 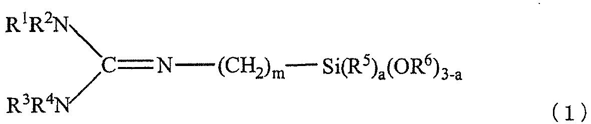 (where R¹ to R⁴ and R⁶ are each independently hydrogen or a substituted or unsubstituted alkyl group that has 1 to 20 carbon atoms, R⁵ is each independently a substituted or unsubstituted alkyl group having 1 to 20 carbon atoms, m is an integer of 2 to 5, and a is an integer of 0 to 2).
<2> The curable composition described in <1>, wherein the component (A) contains one or more silicon-containing reactive groups each represented by the following general formula (2):

   -Si(R⁷)_{3-b}X_{b} (2)

   (where R⁷ is each independently a substituted or unsubstituted alkyl group that has 1 to 20 carbon atoms, a substituted or unsubstituted aryl group that has 6 to 20 carbon atoms, a substituted or unsubstituted aralkyl group that has 7 to 20 carbon atoms, or a triorganosiloxy group represented by -OSi(R')₃, R' is each independently a substituted or unsubstituted alkyl group that has 1 to 20 carbon atoms, X each independently represents a hydroxy group or a hydrolyzable group, and b is an integer of 1 to 3).
<3> The curable composition described in <1> or <2>, wherein the component (A) contains not less than 1.1 silicon-containing reactive groups on average per molecule.
<4> The curable composition description any one of <1> to <3>, wherein the component (A) has a main chain structure containing polyoxypropylene.
<5> The curable composition described in any one of <1> to <4>, wherein R¹ to R⁶ are each independently an alkyl group that has 1 to 6 carbon atoms.
<6> The curable composition described in <5>, wherein R¹ to R⁶ are each independently a methyl group, an ethyl group, and/or a propyl group, and m is an integer of 2 to 4.
<7> The curable composition described in any one of <1> to <5>, wherein the component (C) is one or more selected from the group consisting of tetramethylguanidine propyl trimethoxysilane, tetramethylguanidine propyl methyl dimethoxysilane, tetramethylguanidine propyl dimethyl methoxysilane, and tetramethylguanidine propyl triethoxysilane.
<8> The curable composition described in any one of <1> to <7>, further optionally containing a component (D), the component (D) being a (meth)acrylic ester-based polymer having a silicon-containing reactive group other than a trialkoxysilyl group, wherein a content of the component (B) is not less than 18% with respect to a total mass of the component (A), the component (B), and the component (D).
<9> The curable composition described in any one of <1> to <8>, wherein a content of the component (C) is 0.1 parts by weight to 100 parts by weight with respect to a total mass of the component (A) and the component (B).
<10> A cured product obtained by curing a curable composition described in any one of <1> to <9>.
<11> An adhesive agent, containing a curable composition described in any one of <1> to <9>.
<12> A sealing material, containing a curable composition described in any one of <1> to <9>.

### Advantageous Effects of Invention

Because a nonorganotin-based catalyst is used for a curable composition in accordance with an embodiment of the present invention, the curable composition has excellent miscibility among the components, tends less to suffer a defect caused by transfer of a catalyst, is excellent in curability and adhesiveness, and, when cured, yields a cured product having excellent mechanical performance. The above contents do not represent all the embodiments and advantages of the present invention.

### Description of Embodiments

The following description will discuss an embodiment of the present invention. The present invention is not, however, limited to these embodiments. The present invention is not limited to the configurations described below, but may be altered in various ways within the scope of the claims. The present invention also encompasses, in its technical scope, any embodiment or example derived by combining technical means disclosed in differing embodiments and Examples. All the documents cited in the present specification are incorporated herein by reference.

The technical and scientific terms used in the present invention each have the same meaning as that typically understood by a person skilled in the art, unless otherwise defined.

In the present invention, the term "alkoxy group" means an alkyl group bonded via an oxygen atom to another part of the compound.

In the present invention, the term "(meth)acrylic ester" means "an acrylic ester and/or a methacrylic ester", and the term "(meth)acrylic acid" means "acrylic acid and/or methacrylic acid". Note that expressions similar to the above have respective meanings similar to those of the above.

Unless otherwise defined, a "silyl group" in the present invention means a -SiH₃ group which is obtained from silane and at least one hydrogen atom of which may be substituted with an organic group (e.g., an alkyl group and/or a halogen atom each of which has 1 to 20 carbon atoms). In particular, the silyl group may encompass a trimethylsilyl group, a triethylsilyl group, and the like.

As used in the context describing the present invention (in particular, in the context of the attached claims), the expression such as "an", "one", "a type", "one type", "the" or any other similar expression should be understood to intend both one object and a plurality of objects indicated by such an expression, unless otherwise defined or unless there is a contradiction in light of the context.

As used herein, the numerical range expressed as "numerical value A to numerical value B" or "numerical value A-numerical value B" shall include the numerical values A and B, which are the upper and lower limits of the range.

As used herein, the phrase "alkyl group that has 1 to 20 carbon atoms" means an alkyl group the number of carbon atoms of which is 1 to 20. Other expressions similar to the above have respective meanings similar to that of the above.

As used herein, the expression "may" encompasses both a case of carrying out a certain operation and a case of not carrying out the certain operation. As used herein, the terms "optional" and "optionally" mean that the event or situation modified by the terms may occur or may not occur, and thus encompass both a case in which the event occurs and a case in which the event does not occur.

As used herein, the phrases such as "some specific/preferable embodiments", "other specific/preferable embodiments", "some specific/preferable technical features", and "other specific/preferable technical features" mean that particular elements (e.g., feature, structure, property, and/or characteristic) associated with an embodiment are included in at least one embodiment described herein and can also be included or are not included in other embodiments. It should be understood that the above elements can be combined in various embodiments in any appropriate manner.

The terms "include", "contain", and "comprise" and any variants thereof used in the specification and the claims of the present invention are intended to cover the concept of non-exclusive "inclusion". For example, a process, method or system, product, or facility that includes a series of steps or units is not limited to the listed steps or units, but (i) optionally includes a step or unit that is not listed or (ii) selectively includes another step or unit unique to the process, method, product, or facility.

### <Curable composition>

A curable composition in accordance with an embodiment of the present invention contains: a component (A) which is a polyoxyalkylene-based polymer having a silicon-containing reactive group; a component (B) which is a (meth)acrylic ester-based polymer having a trialkoxysilyl group; a component (C) which is a catalyst represented by general formula (1); and another component which is optionally selected. The above components can be used alone, or two or more types thereof can be used in combination. The following description will discuss the components in order.

### <Component (A)>

The component (A) in accordance with an embodiment of the present invention is a polyoxyalkylene-based polymer having a silicon-containing reactive group. The polyoxyalkylene-based polymer has a relatively low glass transfer temperature and high moisture permeability. As such, a cured product obtained from the polyoxyalkylene-based polymer has comparatively good resistance to cold and comparatively good adhesiveness. In an embodiment of the present invention, the main chain skeleton of the polyoxyalkylene-based polymer is not particularly limited and can be, for example, polyoxyethylene, polyoxypropylene, polyoxybutylene, polytetrahydrofuran, a polyoxyethylene-polyoxypropylene copolymer, a polyoxypropylene-polyoxybutylene copolymer, or the like. In one specific embodiment of the present invention, the component (A) employs a main chain structure that encompasses polyoxypropylene.

### (Silicon-containing reactive group)

A silicon-containing reactive group in accordance with an embodiment of the present invention means a group that has a hydroxy group or a hydrolyzable group bonded to a silicon atom and that is capable of crosslinking by forming a siloxane bond through a silanol condensation reaction accelerated by a catalyst. The hydrolyzable group refers to a group that reacts with water to form a hydroxy group. In some specific embodiments of the present invention, the component (A) has one or more silicon-containing reactive groups represented by the following general formula (2):

-Si(R⁷)_{3-b}X_{b} (2)

where R⁷ is each independently a substituted or unsubstituted alkyl group that has 1 to 20 carbon atoms, a substituted or unsubstituted aryl group that has 6 to 20 carbon atoms, a substituted or unsubstituted aralkyl group that has 7 to 20 carbon atoms, or a triorganosiloxy group represented by -OSi(R')₃, R' is each independently a substituted or unsubstituted alkyl group that has 1 to 20 carbon atoms, X each independently represents a hydroxy group or a hydrolyzable group, and b is an integer of 1 to 3. In a case where a substitution is made in any of the groups described above, examples of the substituent encompass a heteroatom-containing group and a halogen atom. Examples of the heteroatom-containing groups encompass: an oxygen-containing group such as a methoxy group, an ethoxy group, a phenoxy group, and a furyl group; a nitrogen-containing group such as an N,N-dimethylamino group, an N-phenylamino group, an N,N-dimethylaminomethyl group, an N,N-dimethylaminoethyl group, and an N,N-diethylaminomethyl group; and a sulfur-containing group such as a thienyl group. Examples of the halogen atom encompass a fluorine atom, a chlorine atom, a bromine atom, and an iodine atom.

The hydrolyzable group is not particularly limited, and can be a conventionally known hydrolyzable group. Examples of the hydrolyzable group encompass a hydrogen atom, a halogen atom, an alkoxy group, an acyloxy group, a ketoxymate group, an amino group, an amide group, an aminooxy group, a mercapto group, and an alkenyloxy group. In terms of stability of hydrolyzability and easy handling, an alkoxy group is more preferable, and a methoxy group and an ethoxy group are particularly preferable.

For each one silicon atom, a range of the number of hydrolyzable groups or hydroxy groups bonded to the silicon atom is 1 to 3. In a case where two or more hydrolyzable groups or hydroxy groups are bonded to a silicon-containing reactive group, the groups bonded may be the same or different.

In terms of curability, b in the above general formula (2) is preferably 2 or 3.

Examples of R⁷ in the above general formula (1) encompass: an alkyl group such as a methyl group or an ethyl group; a cycloalkyl group such as a cyclohexyl group; an aryl group such as a phenyl group; an aralkyl group such as a benzyl group; and a triorganosiloxy group represented by -OSi(R')₃ where R' is independently a methyl group or a phenyl group. Out of these, in terms of utilization rate of the raw material, R⁷ and R' are each particularly preferably a methyl group.

Examples of the silicon-containing reactive group encompass a trimethoxysilyl group, a triethoxysilyl group, a triisopropoxysilyl group, a dimethoxymethylsilyl group, a diethoxymethylsilyl group, a diisopropoxymethylsilyl group, a (chloromethyl)dimethoxysilyl group, and a (methoxymethyl)dimethoxysilyl group. In terms of obtaining excellent curability, a trimethoxysilyl group, a triethoxysilyl group, a dimethoxymethylsilyl group, and a (methoxymethyl)dimethoxysilyl group are preferable. In terms of easier production, a trimethoxysilyl group and a dimethoxymethylsilyl group are more preferable.

The number of silicon-containing reactive groups included in the component (A) per molecule is preferably 1.1 or more, more preferably 1.1 to 5, and further preferably 1.3 to 4, on average. In a case where the number of silicon-containing reactive groups included in the molecule is less than 1.1, curability may be insufficient, and a cured product having excellent rubber-like elasticity is less likely to be obtained. In the present invention, appropriately increasing the number of silicon-containing reactive groups in the component (A) under certain conditions makes it easier to obtain a cured product having an excellent breaking strength.

The silicon-containing reactive group may exist at a main chain terminal or a side chain terminal of the polyoxyalkylene-based polymer, or may exist at both a main chain terminal and side chain terminal of the organic polymer. The "terminal" includes a structure of a chain terminal of a molecular chain of the polymer and a structure of the vicinity of the chain terminal. Specifically, the "terminal" is defined as a bond portion of a molecular chain of the polymer, which bond portion is made up of a certain number of atoms as counted from an end of the molecular chain among the bonded atoms constituting the molecular chain, the number being 20% (preferably 10%) of the number of the bond atoms. In a case where the terminal is represented by the number of bonded atoms, the terminal is defined as a site up to a 30th atom, preferably a 20th atom, from an end of the molecular chain of the polymer. In particular, in a case where a silicon-containing reactive group exists only at a main chain terminal, the effective network size in the ultimately formed cured product becomes longer, and it is easier to obtain a rubbery cured product which has high elongation and a low elastic modulus. In some specific embodiments of the present invention, the component (A) is a polyoxygenated propylene-based polymer having a trimethoxysilyl group and/or a methyldimethoxysilyl group at a terminal(s) thereof.

### (Method for synthesizing component (A))

In some specific embodiments of the present invention, the polyoxyalkylene-based polymer is a product obtained by causing a polymer, which has a hydroxy group at a terminal thereof and has had a carbon-carbon unsaturated bond introduced to the terminal, to react with a compound containing a silicon-containing reactive group capable of reacting with a carbon-carbon unsaturated bond.

A preferable method for polymerizing a precursor of the polyoxyalkylene-based polymer, i.e., a polymer having a hydroxy group at a terminal, is such that an epoxy compound is polymerized with an initiator having a hydroxy group, using a metal cyanide complex catalyst such as a zinc hexacyanocobaltate glyme complex. Examples of the initiator having a hydroxy group encompass an initiator having one or more hydroxy groups such as ethylene glycol, propylene glycol, glycerin, pentaerythritol, polypropylene glycol having a low molecular weight, polyoxypropylene triol, allyl alcohol, a polypropylene monoallyl ether, and a polypropylene monoalkyl ether. Examples of the epoxy compound encompass: an alkylene oxide such as ethylene oxide or propylene oxide; a glycidyl ether such as a methylglycidyl ether or an allyl glycidyl ether. Among these, propylene oxide is preferable.

In some preferable embodiments of the present invention, the following method is employed for introducing a carbon-carbon unsaturated bond into a terminal: a polymer having a hydroxy group at a terminal is treated with an alkali metal salt; and then the treated polymer is caused to react with an epoxy compound having a carbon-carbon unsaturated bond and/or a halogenated hydrocarbon compound having a carbon-carbon unsaturated bond.

In an embodiment of the present invention, an alkali metal salt is used in a case where a polymer having a hydroxy group at a terminal and an epoxy compound having a carbon-carbon unsaturated bond are reacted with each other. This allows the epoxy compound having a carbon-carbon unsaturated bond to react uniformly with respect to terminal sites of all polymers. Examples of the alkali metal salt used in an embodiment of the present invention encompass sodium hydroxide, sodium alkoxide; potassium hydroxide, potassium alkoxide; lithium hydroxide, lithium alkoxide, cesium hydroxide, and cesium alkoxide. In terms of availability, sodium methoxide is preferable. The alkali metal salt can be used in a state of being dissolved in a solvent (for example, methanol, ethanol, or the like). An amount in which the alkali metal salt used in an embodiment of the present invention is added is preferably an amount in which a molar ratio of the polymer to the hydroxy group is not less than 0.6, and more preferably an amount in which the molar ratio is not less than 0.8. In a case where the amount of the alkali metal salt added is too small, the reaction may not proceed sufficiently. In a case where the amount of the alkali metal salt added is too large, there is a risk that the alkali metal salt will remain as an impurity and cause a side reaction.

An epoxy compound having a carbon-carbon unsaturated bond used in an embodiment of the present invention is, for example, preferably an allyl glycidyl ether, a methacryl glycidyl ether, glycidyl acrylate, glycidyl methacrylate, butadiene monoxide, 1,4-cyclopentadiene monoepoxide, and particularly preferably an allyl glycidyl ether, from the viewpoint of reaction activity. As an amount in which the epoxy compound having a carbon-carbon unsaturated bond is added, it is possible to employ any amount taking account of an amount of a carbon-carbon unsaturated bond introduced into the polymer and reactivity. In particular, the amount of the epoxy compound added is preferably not less than 0.2, more preferably not less than 0.5, in terms of molar ratio with respect to the hydroxy group contained in the polymer. The molar ratio is preferably not more than 5.0, more preferably not more than 2.0. Examples of the halogenated hydrocarbon compound having a carbon-carbon unsaturated bond used in an embodiment of the present invention encompass vinyl chloride, allyl chloride, methallyl chloride, vinyl bromide, allyl bromide, methallyl bromide, vinyl iodide, allyl iodide, and methallyl iodide. In terms of easy handling, it is more preferable to use allyl chloride and methallyl chloride. An amount in which the halogenated hydrocarbon compound having a carbon-carbon unsaturated bond is added is not particularly limited. A molar ratio of the halogenated hydrocarbon compound with respect to the hydroxy group contained in the polyoxyalkylene-based polymer has a lower limit which is preferably not less than 0.7 and more preferably not less than 1.0, and has an upper limit which is preferably not more than 5.0 and more preferably not more than 2.0.

For the introduction of the silicon-containing reactive group, a known method can be used. For example, the following introduction methods can be employed.

(I) A method in which a hydrosilane compound is added, by a hydrosilylation reaction, to a polymer having a carbon-carbon unsaturated bond.
(II) A method in which a polymer having a carbon-carbon unsaturated bond is reacted with a compound (also referred to as silane coupling agent) having both: a group capable of reacting with a carbon-carbon unsaturated bond to form a bond; and a silicon-containing reactive group. Examples of the group in the silane coupling agent which group is capable of reacting with a carbon-carbon unsaturated bond to form a bond encompass, but are not limited to, a mercapto group.
(III) A method in which an organic polymer having in its molecule a functional group such as a hydroxy group, an epoxy group, or an isocyanate group is reacted with a compound having a silicon-containing reactive group and a functional group that is reactive with the functional group of the organic polymer.

The method of (I) is preferable because: the reaction is simple, the amount of the silicon-containing reactive group introduced can be adjusted, and the physical properties of the resulting polyoxyalkylene-based polymer containing a silicon-containing reactive group can be stabilized. The method of (II) is preferable in that it has many reaction options and makes it possible to easily increase the introduction rate of a silicon-containing reactive group. The technique of causing an organic polymer having a hydroxy group at a terminal thereof to react with a compound having an isocyanate group and a silicon-containing reactive group in the method of (I) or the method of (III) is preferable because, with such a technique, a high conversion rate is achieved in a comparatively short reaction time.

As the hydrosilane compound used in the method of (I), chlorosilanes and alkoxysilanes are preferable. In particular, alkoxysilanes are most preferable because the resulting curable composition is stable in hydrolyzability and easy to handle. Regarding alkoxysilanes, methyldimethoxysilane is preferable, because (i) methyldimethoxysilane is readily available, (ii) a curable composition containing an organic polymer obtained has good curability and storage stability, and (iii) a cured product has good elongation characteristics and tensile strength. Further, in terms of curability and recoverability of the resulting curable composition, trimethoxysilane is preferable. The hydrosilylation reaction can be accelerated using various types of catalysts. The catalyst used for hydrosilylation can be a known catalyst such as various complexes of cobalt, nickel, iridium, platinum, palladium, rhodium, ruthenium, and the like.

Examples of the method of (II) encompass, but are not limited to, a method in which a compound having a mercapto group and a silicon-containing reactive group is introduced into an unsaturated binding site of the polymer through a radical addition reaction in the presence of a radical initiator and/or a radical generation source of various types. Examples of the compound having a mercapto group and a silicon-containing reactive group encompass, but are not limited to, compounds such as γ-mercaptopropyltrimethoxysilane, γ-mercaptopropylmethyldimethoxysilane, γ-mereap to propyl triethoxysilane, γ-mercaptopropylmethyldiethoxysilane, mercaptomethyl trimethoxysilane, and mercaptomethyltriethoxysilane.

In the method (III), examples of the technique of causing an organic polymer having a hydroxy group to react with a compound having an isocyanate group and a silicon-containing reactive group encompass, but are not limited to, a method disclosed in Japanese Patent Application Publication, Tokukaihei, No. 3-47825. Examples of the compound having an isocyanate group and a silicon-containing reactive group encompass, but are not limited to, compounds such as γ-isocyanate propyltrimethoxysilane, γ-isocyanate propylmethyldimethoxysilane, γ-isocyanate propyltriethoxysilane, γ-isocyanate propylmethyldiethoxysilane, isocyanate methyltrimethoxysilane, isocyanate methyltriethoxysilane, isocyanate methyldimethoxymethylsilane, and isocyanate methyldiethoxymethylsilane.

A number average molecular weight of the component (A) is preferably 3,000 to 100,000 and more preferably 5,000 to 30,000, in terms of polystyrene-equivalent molecular weight obtained in gel permeation chromatography (GPC). The number average molecular weight being less than 3,000 increases the amount of the silicon-containing reactive group introduced per unit weight of the polyoxyalkylene-based polymer and therefore may be not suitable from the viewpoint of production costs. The number average molecular weight being more than 100,000 tends to increase the viscosity of a curable composition and therefore is not preferable from the viewpoint of handling. The molecular weight of the polyoxyalkylene-based polymer can also be represented as an equivalent molecular weight based on a terminal group. The equivalent molecular weight based on a terminal group is found as below. Specifically, an organic polymer precursor into which no silicon-containing reactive group has been introduced is subjected to a titrimetric analysis carried out based on respective principles of (i) a hydroxy value measurement method defined in JIS K 1557 and (ii) an iodine value measurement method defined in JIS K 0070, so that a concentration of the terminal group is directly measured. Then, a structure (branching degree determined in accordance with a polymerization initiator used) of an organic polymer is considered. The terminal group equivalent molecular weight thus can be found. The equivalent molecular weight of the polyoxyalkylene-based polymer based on a terminal group can be obtained such that (i) a calibration curve, determined by general GPC measurement, of a number average molecular weight of the organic polymer precursor and a calibration curve of the equivalent molecular weight of the organic polymer precursor based on a terminal group are prepared, and (ii) a number average molecular weight, obtained by GPC, of the polyoxyalkylene-based polymer is converted to obtain the terminal-equivalent molecular weight. The molecular weight distribution (Mw/Mn) of the component (A) is not particularly limited, but is preferably less than 2.0, more preferably not more than 1.6, even more preferably not more than 1.5, and particularly preferably not more than 1.4. The molecular weight distribution of the component (A) can be obtained from the number average molecular weight (Mn) and the weight average molecular weight (Mw) obtained by GPC measurement.

Another selectable embodiment may include a urethane bond and/or a urea bond in the main chain of the component (A), provided that the effects of the present invention are not significantly affected.

The component (A) can contain only one type of polyoxyalkylene-based polymer having a silicon-containing reactive group, or can be a composition containing two or more types of polyoxyalkylene-based polymer each having a silicon-containing reactive group. In some specific embodiments of the present invention, the component (A) is at least one selected from the group consisting of a polyoxyalkylene-based polymer which contains 1.3 to 4, per molecule, of at least one selected from the group consisting of a trimethoxysilyl group and a methyldimethoxysilyl group, which contains a silicon-based group, and which has a number average molecular weight of 10,000 to 35,000.

A weight ratio of the component (A) with respect to the total weight of the curable composition can be adjusted as appropriate. In terms of handleability, curability, and cost, the weight ratio is preferably 18 wt% to 90 wt%, more preferably 23 wt% to 85 wt%, and particularly preferably 30 wt% to 80 wt%.

### <Component (B)>

The inventors of the present invention found that, in a case where a (meth)acrylic ester-based polymer (component (B)) having a trialkoxysilyl group is added to the curable composition and, further, a catalytic reaction is carried out with use of the component (C) in accordance with an embodiment of the present invention, the curability is significantly improved, and the curing time can be reduced. In a case where the component (B) is not added, the catalytic activity of the component (C) with respect to the component (A) becomes low. In a case where another (meth)acrylic ester-based polymer having no trialkoxysilyl group is used, sufficient curability cannot be obtained even with use of a similar catalyst in combination, or with an increase in the amount of the catalyst used.

A main monomer unit included in the main chain of the component (B) consists of a (meth)acrylic ester-based monomer. The (meth)acrylic ester-based monomer is not limited to any particular one, and various monomers can be used. Specific examples of the (meth)acrylic ester-based monomer encompass methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 3-(dimethoxymethylsilyl)propyl (meth)acrylate (also known as γ-(meth)acryloyloxy propyldimethoxymethylsilane), 2-(dimethoxymethylsilyl)ethyl (meth)acrylate, 2-(dimethoxymethylsilyl)methyl (meth)acrylate, 2-(diethoxymethylsilyl)methyl (meth)acrylate, 3-[(methoxymethyl)dimethoxysilyl]propyl (meth)acrylate, an ethylene oxacide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutyl ethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate. These (meth)acrylic ester-based monomers can be used alone or in combination of two or more thereof. A content of the (meth)acrylic ester-based monomer unit is preferably not less than 50% by weight and more preferably not less than 70% by weight, with respect to a total of the (meth)acrylic ester-based polymer.

The monomer units constituting the main chain can include a unit formed of a monomer containing a (meth)acryloyl group other than the (meth)acrylic ester-based monomer. Examples of such a monomer encompass: (meth)acrylic acid; an amide group-containing monomer such as N-methylolacrylamide or N-methylolmethacrylamide; an epoxy group-containing monomer such as glycidyl acrylate or glycidyl methacrylate; and a monomer containing a nitrogen-containing group such as diethylaminoethyl acrylate or diethylaminoethyl methacrylate. These monomers can be used alone or in combination of two or more thereof. The monomer units constituting the main chain can include a unit consisting of a monomer containing no (meth)acryloyl group (that is, a monomer containing neither an acryloyl group nor a methylacryloyl group). Examples of such a monomer include a vinyl-based monomer that is copolymerizable with the (meth)acrylic ester-based monomer. Such a vinyl-based monomer is not particularly limited, and examples thereof encompass: styrene-based monomers such as styrene, vinyltoluene, α-methylstyrene, chlorostyrene, styrene sulfonic acid, and salts thereof; fluorine-containing vinyl-based monomers such as perfluoroethylene, perfluoropropylene, and vinylidene fluoride; silicon-containing vinyl-based monomers such as vinyltrimethoxysilane and vinyltriethoxysilane; maleic anhydride, maleic acid, a monoalkyl maleate ester, and a dialkyl maleate ester; fumaric acid, a monoalkyl fumarate ester, and a dialkyl fumarate ester; maleimide-based monomers such as maleimide, methylmaleimide, ethylmaleimide, propylmaleimide, butylmaleimide, hexylmaleimide, octyl maleimide, dodecyl maleimide, stearyl maleimide, phenylmaleimide, and cyclohexylmaleimide; nitryl group-containing vinyl-based monomers such as acrylonitrile and methacrylonitrile; vinyl ester-based monomers such as vinyl acetate and vinyl propionate; alkene-based monomers such as ethylene and propylene; conjugated diene-based monomers such as butadiene and isoprene; vinyl chloride; vinylidene chloride; allyl chloride; and allyl alcohol. These monomers can be used alone or in combination of two or more thereof.

In some specific embodiments of the present invention, main monomer units included in the main chain of the component (B) include a methacrylic ester-based monomer and an acrylic ester-based monomer.

Examples of the trialkoxysilyl group contained in the component (B) encompass a trimethoxysilyl group, a triethoxysilyl group, and a triisopropoxysilyl group. In some preferable embodiments of the present invention, the trialkoxysilyl group is a trimethoxysilyl group.

The (meth)acrylic ester-based polymer which is a precursor for producing the component (B) can be produced by a known method. Examples of the method encompass an ordinary radical polymerization method in which an azo compound, a peroxide, or the like is used as a polymerization initiator. Specific examples of the radical polymerization method encompass a method in which a polymerization reaction is carried out by adding a polymerization initiator, a chain transfer agent, a solvent, and the like.

A method of introducing the trialkoxysilyl group into the (meth)acrylic ester-based polymer is not particularly limited, but, for example, the following methods can be used.

(i): A method in which a monomer having a trialkoxysilyl group is copolymerized with a monomer having no silicon-containing reactive group. With this method, however, the trialkoxysilyl group tends to be randomly introduced into the main chain of the polymer. Examples of the monomer having a trialkoxysilyl group encompass 3-(trimethoxysilyl)propyl (meth)acrylate and 3-methylacryloyloxy propyltrimethoxysilane (also known as γ-methylacryloyloxy propyltrimethoxysilane).
(ii): A polymerization reaction using a mercaptosilane compound having a trialkoxysilyl group as a chain transfer agent to produce a (meth)acrylic ester-based polymer. With this method, a trialkoxysilyl group can be introduced into a terminal of the polymer. Examples of the mercaptosilane compound having a trialkoxysilyl group include 3-mercaptopropyltrimethoxysilane (also known as γ-mercaptopropyltrimethoxysilane).

There is also a method in which a silicon-containing reactive group is introduced by modifying a terminal functional group of the (meth)acrylic ester-based polymer synthesized by an active radical polymerization method. It is easy to introduce a functional group into a terminal of the (meth)acrylic ester-based polymer obtained by the active radical polymerization method. As such, it is possible to introduce a silicon-containing reactive group into a terminal of the polymer by modification. The method can be any modification reaction, such as any of the following methods: a method in which a compound having a functional group capable of reacting with a terminal reactive group obtained by polymerization and a silicon-containing group is used; a method in which a compound having a functional group capable of reacting with a terminal reactive group and a double bond is used to introduce a double bond into a terminal of a polymer, and then a silicon-containing reactive group is introduced by hydrosilylation or the like; and the like.

The above described methods can be used in combination as appropriate. For example, in a case where the method (i) and the method (ii) are combined, a (meth)acrylic ester-based polymer having respective trialkoxysilyl groups in the two methods can be obtained at both the main chain terminal and a side chain terminal of the molecular chain.

In some specific embodiments of the present invention, the component (B) can contain another silicon-containing reactive group such as a dimethoxymethylsilyl group or a diethoxymethylsilyl group, and preferably contains a dimethoxymethylsilyl group. The method for introducing the another silicon-containing reactive group is similar to the above-described method for introducing a trialkoxysilyl group.

In an embodiment of the present invention, the component (B) can contain only one type of (meth)acrylic ester-based polymer having a trialkoxysilyl group, or can be a composition containing two or more types of (meth)acrylic ester-based polymer having a trialkoxysilyl group. The molecular weight of the component (B) is not particularly limited. In some specific embodiments of the present invention, a number average molecular weight of the component (B) is not less than 1,500 and preferably not more than 3,500, in terms of polystyrene-equivalent molecular weight obtained in GPC.

In the curable composition, a mass ratio (also referred to as a content ratio) between the component (A) and the component (B) is not particularly limited. In some specific embodiments of the present invention, a percentage of the component (B) with respect to a total mass of the component (A), the component (B), and the optional component (D) is not less than 18%, further, not less than 20%, or further, not less than 30%. In some other specific embodiments of the present invention, a mass ratio of the component (A) to the component (B) is (9 to 1.2):1, more preferably (5 to 1.5):1. In a case where the content of the component (B) is too low, a curability improvement effect tends less to be exhibited. In a case where the content of the component (B) is too high, the mechanical strength of the cured product tends to decrease. In a case where the component (A) is not added to the curable composition, the component (C) tends less to exhibit a sufficient curing catalytic activity to the component (B).

### <Component (C)>

The nonorganotin-based catalyst employed in an embodiment of the present invention mainly contains a silane compound having a guanidine group, represented by the following general formula (1): 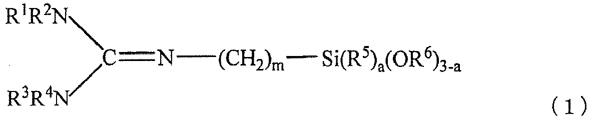 where R¹ to R⁴ and R⁶ are each independently hydrogen or a substituted or unsubstituted alkyl group that has 1 to 20 carbon atoms, R⁵ is each independently a substituted or unsubstituted alkyl group that has 1 to 20 carbon atoms, m is an integer of 2 to 5, and a is an integer of 0 to 2.

In the present invention, the following matter has been surprisingly discovered with respect to such a compound. That is, the compound has a high catalytic activity with respect to curable compositions each consisting of the component (A) and the component (B) in the present invention, and takes less curing time; the compound has high miscibility in the composition of the present invention, has easy processability, and is less prone to separation or transfer of a catalyst in comparison with catalysts such as DBU; and further, the mechanical performance of a cured product is ensured, and in particular, the cured product can be firmly attached to surfaces of various base materials such as a polymethyl methacrylate base material, a polyvinyl chloride base material, and a metal base material. Note that an aryl-substituted biguanide catalyst such as 1-o-tolylbiguanide is in a solid state at room temperature, and therefore can cause a problem in the aspect of dispersibility, such as agglomerates, in a case where the aryl-substituted biguanide catalyst is added to the curable composition as a curing catalyst at the end. The component (C) in accordance with an embodiment of the present invention is liquid even at room temperature and therefore has excellent dispersibility.

In the present invention, R¹ to R⁴ and R⁶ are each independently hydrogen or a substituted or unsubstituted alkyl group that has 1 to 20 carbon atoms, and R⁵ is each independently a substituted or unsubstituted alkyl group that has 1 to 20 carbon atoms. Examples of the alkyl group having 1 to 20 carbon atoms encompass a linear or branched alkyl group, such as a methyl group, an ethyl group, an n-propyl group, an isopropyl group, an n-butyl group, an isobutyl group, a sec-butyl group, a t-butyl group, an n-pentyl group, an isopentyl group, a neopentyl group, an n-hexyl group, an isohexyl group, an n-heptyl group, an n-octyl group, an n-nonyl group, and an n-decyl group. Further, R¹ to R⁶ are each independently an alkyl group that has 1 to 6 carbon atoms, such as a methyl group, an ethyl group, an n-propyl group, an isopropyl group, an n-butyl group, an isobutyl group, a sec-butyl group, a t-butyl group, an n-pentyl group, an isopentyl group, an neopentyl group, an n-hexyl group, and an isohexyl group. In some specific embodiments of the present invention, R¹ to R⁴ and R⁶ are each independently hydrogen or a substituted alkyl group that has 1 to 20 carbon atoms, and examples of the substituent encompass a halogen, a hydroxy group, a carboxyl group, a nitro group, a cyano group, a methoxy group, an ethoxy group, a phenoxy group, a furyl group, and a thienyl group. In some preferable embodiments of the present invention, R¹ to R⁴ and R⁶ are each independently hydrogen or an alkyl group that has 1 to 6 carbon atoms, R⁵ is each independently an alkyl group that has 1 to 6 carbon atoms, and further, R¹ to R⁶ are each independently an alkyl group that has 1 to 6 carbon atoms. In some preferable embodiments of the present invention, R¹ to R⁶ are each independently a methyl group, an ethyl group, and/or a propyl group. In another preferable embodiment of the present invention, m is an integer of 2 to 4, and further, m is 3. In some specific embodiments of the present invention, the component (C) is one or more selected from the group consisting of tetramethylguanidine propyl trimethoxysilane, tetramethylguanidine propyl methyl dimethoxysilane, tetramethylguanidine propyl dimethyl methoxysilane, and tetramethylguanidine propyl triethoxysilane. In terms of availability, cost, and the like, it is preferable that, in general formula (1), R¹ to R⁴ and R⁶ be each independently methyl, m be 3, and a be 0. That is, the component (C) is preferably a commercially available tetramethylguanidine propyl trimethoxysilane (cas registration number: 69709-01-9). The molecular formula thereof is as follows. 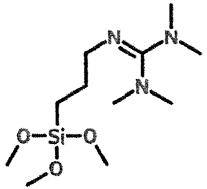 The catalyst of general formula (1) in accordance with an embodiment of the present invention can be in the form of a tautomer. In the scope of the present invention, all conceivable tautomers of the catalyst in accordance with an embodiment of the present invention are considered to exhibit respective effects that are equivalent to one another. The catalyst in accordance with an embodiment of the present invention can exist in a protonated form.

In an embodiment of the present invention, the component (C) may be used in combination with another curing catalyst (e.g., with another catalyst that is: a non-tin-based catalyst such as a guanidine catalyst or an amidine; a small amount of a tin-based catalyst; or the like), provided that the effects of the present invention are not compromised. In terms of toxicity or environmental challenges, it is preferable to minimize a content of the tin element in the curable composition. A content of the tin compound in the curable composition is preferably not more than 1,000 ppm and more preferably not more than 500 ppm. Even more preferably, the curable composition does not contain a tin compound, that is, a non-tin-based catalyst is used for the curable composition. In a preferable embodiment of the present invention, the present invention only contains one type of silanol condensate catalyst as the component (C). The component (C) is not particularly limited in amount used. In some specific embodiments of the present invention, a content (amount used) of the component (C) is 0.1 parts by weight to 10 parts by weight, further, 0.5 parts by weight to 8 parts by weight, and further, 1 parts by weight to 5 parts by weight, with respect to 100 parts by weight of a total mass of the component (A) and the component (B). In a case where the content of the component (C) is too low, the reaction speed can be insufficient. In a case where the content of the component (C) is too high, an excessively high reaction speed causes a reduction in time during which the composition can be handled, and the reduction compromises workability or storage stability.

### <Another polymer>

The composition in accordance with an embodiment of the present invention may contain another (meth)acrylic ester-based polymer having a silicon-containing reactive group (hereinafter referred to as "(meth)acrylic ester-based polymer (D)") apart from the component (A) and the component (B), provided that the effects of the present invention are not compromised. The silicon-containing reactive group of the (meth)acrylic ester-based polymer (D) can be, for example, a dimethoxymethylsilyl group, a diethoxymethylsilyl group, or the like and is preferably a dimethoxymethylsilyl group. In terms of curability required, the content of the component (B) is not less than 60% by weight and more preferably not less than 80% by weight relative to 100% by weight of a total amount of the component (B) and the (meth)acrylic ester-based polymer (D), and it is even more preferable that the composition contain no (meth)acrylic ester-based polymer (D).

### <Other Component(s)>

The curable composition in accordance with an embodiment of the present invention may contain other component(s) apart from the components (A) to (C) and the optional component (D), provided that the effects of the present invention are not compromised. The following description will discuss the other component(s).

In some specific embodiments of the present invention, the curable composition of the present invention contains a plasticizer. The plasticizer can be a known plasticizer. Specific examples of the plasticizer encompass: a phthalic ester compound such as dibutyl phthalate, diisononyl phthalate (DINP), diheptyl phthalate, di(2-ethylhexyl)phthalate, diisodecyl phthalate (DIDP), or butylbenzyl phthalate, a terephthalic ester such as bis(2-ethylhexyl) 1,4-benzenedicarboxylate; a non-phthalic ester compound such as diisononyl 1,2-cyclohexanedicarboxylate; an aliphatic polyhydric carboxylic ester compound such as dioctyl adipate, dioctyl sebacate, dibutyl sebacate, diisodecyl succinate, or tributyl acetylcitrate; an unsaturated fatty acid ester compound such as butyl oleate or methyl acetylricinoleate; a phenyl alkylsulfonate ester; a phosphoric ester compound such as tricresyl phosphate or tributyl phosphate; a trimellitic acid ester compound; paraffin chloride; hydrocarbon-based oil such as alkyldiphenyl or partially hydrogenated terphenyl; and an epoxide plasticizer such as epoxidized soybean oil or benzyl epoxide stearate. The plasticizer can include a polymeric plasticizer. Examples of the polymeric plasticizer encompass: polyoxyalkylene; a (meth)acrylic ester-based polymer; an ester of polyalkylene glycol such as diethylene glycol dibenzoate, triethylene glycol dibenzoate, or a pentaerythritol ester; a polyester obtained from (i) dibasic acid such as sebacic acid, adipic acid, azelaic acid, or phthalic acid and (ii) dihydric alcohol such as ethylene glycol, diethylene glycol, triethylene glycol, propylene glycol, or dipropylene glycol; a polyether obtained by urethanization of a hydroxy group of polyether polyol, a polyether obtained by carboxylic esterification of a hydroxy group of polyether polyol, and a polyether obtained by terminal etherification of a hydroxy group of polyether polyol; polystyrene such as polystyrene or poly-a-methylstyrene; polybutadiene, polybutene, polyisobutylene, butadiene-acrylonitrile, and polychloroprene; and a hydrogenated polybutadiene oligomer such as α-olefin hydride. One type of these substances may be used alone, or two or more types thereof may be used in combination. The plasticizer is effective in lowering viscosity of the composition and improving processability of the composition. In one specific embodiment of the present invention, the plasticizer is preferably one or more selected from the group consisting of a phthalic ester a saturated or unsaturated fatty acid ester compound, a phosphoric ester compound, an epoxide plasticizer, and a polymeric plasticizer, and is particularly preferably diisononyl phthalate. A content of the plasticizer is preferably 10 parts by weight to 120 parts by weight and more preferably 20 parts by weight to 100 parts by weight, with respect to 100 parts by weight of a total mass of the component (A) and the component (B). In a case where the amount is less than 10 parts by weight, there will be a less viscosity reduction effect and inadequate workability. In a case where the amount is more than 120 parts by weight, sufficient mechanical performance will not be obtained, and, for example, a cured product will have a reduced tensile strength.

In some specific embodiments of the present invention, the curable composition of the present invention further contains an inorganic filler. The inorganic filler is not particularly limited, and can be a known general inorganic filler. Examples of the inorganic filler encompass: a reinforcing filler such as fumed silica, precipitable silica, crystalline silica, fused silica, calcined clay, clay or kaolin; resin powder such as calcium carbonate, dolomite, silicic anhydride, hydrous silicic acid, magnesium carbonate, siliceous earth, talc, titanium oxide, bentonite, organic bentonite, ferric oxide,, fine aluminum powder, zinc oxide, active zinc oxide, PVC powder, or PMMA powder; and a fibrous filler such as glass fiber. One type of these substances may be used alone, or two or more types thereof may be used in combination. The inorganic filler is effective in improving the dispersion stability of the composition and the strength of the cured product. In particular, in terms of easy handling, easy availability, and cost, the inorganic filler is preferably calcium carbonate. The calcium carbonate may be at least one selected from the group consisting of heavy calcium carbonate, precipitable calcium carbonate, and calcium carbonate obtained by surface-treating any of these calcium carbonates. The precipitable calcium carbonate encompasses light calcium carbonate having a longitudinal size of not less than 1 pm, and colloidal calcium carbonate having an average particle diameter of not more than 1 µm. An average particle diameter of the heavy calcium carbonate is preferably 0.3 µm to 10 pm, more preferably 0.7 um to 7 pm, particularly preferably 0.7 um to 5 µm, and most preferably 1.1 µm to 4 µm. The inorganic filler is preferably selected from the group consisting of colloidal calcium carbonate or surface-treated colloidal calcium carbonate, because such an inorganic filler makes it possible to achieve excellent mechanical physical properties. Examples of the surface treatment agents encompass: fatty acid such as stearic acid; a resin acid such as a fatty acid ester, a modified fatty acid, or rosin; paraffin; polyethylene wax; and an cation-based surface-active agent. In some specific embodiments, the inorganic filler is preferably colloidal calcium carbonate treated with a fatty acid or with a resin acid. A content of the inorganic filler is preferably 10 parts by weight to 500 parts by weight, more preferably 50 parts by weight to 450 parts by weight, and even more preferably 200 parts by weight to 400 parts by weight, with respect to 100 parts by weight of a total mass of the component (A) and the component (B). In a case where the content is less than 10 parts by weight, the dispersion stability and the strength may be negatively affected. In a case where the content is more than 500 parts by weight, the composition will have an increased viscosity and there tends to be a decrease in processability.

In some specific embodiments of the present invention, the curable composition of the present invention further contains a stabilizer. Specific examples of the stabilizer encompass an antioxidant, a photo stabilizer, and an ultraviolet absorbent. The antioxidant can improve the weather resistance of the cured product. Examples of the antioxidant encompass hindered phenol-based antioxidants, monophenol-based antioxidants, bisphenol-based antioxidants, and polyphenol-based antioxidants. Hindered phenol-based antioxidants such as Irganox 245 are particularly preferable. A content of the antioxidant is preferably 0.1 parts by weight to 10 parts by weight and particularly preferably 0.2 parts by weight to 5 parts by weight, with respect to 100 parts by weight of a total mass of the component (A) and the component (B). The light stabilizer can prevent deterioration of the cured product caused by photooxidation. Specific examples of the photo stabilizer encompass benzotriazole-based compounds, hindered amine-based compounds, and benzoate-based compounds. Hindered amine-based compounds are particularly preferable. A content of the photo stabilizer is preferably 0.1 parts by weight to 10 parts by weight and more preferably 0.2 parts by weight to 5 parts by weight, with respect to 100 parts by weight of a total mass of the component (A) and the component (B). The ultraviolet absorbent can improve the weather resistance of the surface of the cured product. Examples of the ultraviolet absorbent encompass benzophenone-based compounds, benzotriazole-based compounds, salicylate-based compounds, substituted tolyl-based compounds, and metal chelating compounds. Benzotriazole-based compounds are particularly preferable. A content of the ultraviolet absorbent is preferably 0.1 parts by weight to 10 parts by weight and more preferably 0.2 parts by weight to 5 parts by weight, with respect to 100 parts by weight of a total mass of the component (A) and the component (B).

In some specific embodiments of the present invention, the curable composition of the present invention further contains a thickener. The thickener contains a silane coupling agent, a reaction product of a silane coupling agent, or a compound other than a silane coupling agent. Specific examples of the silane coupling agent encompass: an amino-group-containing silane such as γ-aminopropyltrimethoxysilane, γ-aminopropyltriethoxysilane, γ-aminopropylmethyldimethoxysilane, γ-aminopropylmethyldiethoxysilane, N-β-aminoethyl-γ-aminopropyltrimethoxysilane, N-β-aminoethyl-γ-aminopropylmethyldimethoxysilane, N-β-aminoethyl-γ-amino propyltriethoxysilane, N-β-aminoethyl-γ-aminopropylmethyldiethoxysilane, γ-ureidopropyltrimethoxysilane, N-phenyl-γ-amino propyl silane, N-benzyl-γ-amino propyl trimethoxy silane, N-vinylbenzyl-γ-aminopropylsilane, (aminomethyl) dimethoxymethylsilane, (aminomethyl)trimethoxysilane, (phenylamino methyl) dimethoxymethylsilane, (phenylaminomethyl)trimethoxysilane, or bis(3-trimethoxysilylpropyl)amine; a mercapto-group-containing silane such as y-mercaptopropyltrimethoxysilane, γ-mercaptopropyltriethoxysilane, γ-mercaptopropylmethyldimethoxysilane, or γ-mercaptopropylmethyldiethoxysilane; an epoxy-group-containing silane such as γ-glycidoxypropyl trimethoxysilane, γ-glycidoxypropyltriethoxysilane, γ-glycidoxypropylmethyldimethoxysilane, β-(3,4-epoxycyclohexyl)ethyltrimethoxysilane, or β-(3,4-epoxycyclohexyl)ethyltriethoxysilane; a reaction product of an amino-group-containing silane with an epoxy-group-containing silane; a reaction product of a mercapto-group-containing silane with an epoxy-group-containing silane; a reaction product of an amino-group-containing silane with an epoxide resin; a reaction product of a mercapto-group-containing silane with an epoxide resin; siloxane acetate such as ethoxysilane, a tetraethoxysilane tetramer, or a tetraethoxysilane hexamer; and a vinyl group silane such as vinyltrimethoxysilane, vinyltriethoxysilane, or vinyltriethoxysilane. One type of these silane coupling agents may be used alone, or two or more types thereof may be used in combination. Further, reaction products of various silane coupling agents can be used. Examples of the reaction product encompass: a reaction product of isocyanate silane with a hydroxy group-containing compound; a reaction product of isocyanate silane with an amino group-containing compound; a reaction product of aminosilane with a (meth)acryloyl group-containing compound (Michael addition reaction product); a reaction product of aminosilane with an epoxy group-containing compound; a reaction product of an epoxy group silane with a carboxylic group-containing compound; and a reaction product of an epoxy group silane with an amino group-containing compound. It is also possible to use a reaction product of silane coupling agents such as a reaction product of isocyanate silane and aminosilane, a reaction product of aminosilane and a (meth)acryloyl group-containing silane, a reaction product of aminosilane and an epoxy group silane, or a reaction product of aminosilane and an acid anhydride-containing silane. These reaction products can be used alone or in combination of two or more thereof. Specific examples of the thickener other than a silane coupling agent are not particularly limited, but encompass an epoxide resin, a phenol resin, sulfur, alkyl titanates, and aromatic polyisocyanates. One type of these thickeners may be used alone, or two or more types thereof may be used in combination. By adding the thickener, it is possible to improve the adhesiveness to the adherend. A content of the thickener is ordinarily in a range of 0.1 parts by weight to 20 parts by weight and preferably 0.5 parts by weight to 15 parts by weight, with respect to 100 parts by weight of a total mass of the component (A) and the component (B).

In some specific embodiments of the present invention, the curable composition of the present invention may further contains a dehydration agent. Examples of the dehydration agent encompass synthetic zeolite, active alumina, silica gel, quick lime, magnesium oxide, an alkoxysilane compound (for example, n-propyltrimethoxysilane, vinyltrimethoxysilane, vinylmethyldimethoxysilane, methyl silicate, ethyl silicate, γ-mercaptopropylmethyldimethoxysilane, γ-mercaptopropylmethyldiethoxysilane, γ-glycidoxypropyltrimethoxysilane, and the like), an oxazolidine compound, and an isocyanate compound. The dehydration agent is even more preferably vinyltrimethoxysilane. A content of the dehydration agent is preferably 0.1 parts by weight to 20 parts by weight and particularly preferably 0.5 parts by weight to 10 parts by weight, with respect to 100 parts by weight of a total mass of the component (A) and the component (B).

The curable composition in accordance with an embodiment of the present invention may contain various additives as needed, in order to adjust the curable composition or adjust various other physical properties of the cured product. Examples of such additives encompass flame retardants, radical inhibitors, metal deactivators, antiozonants, phosphorus-based peroxide decomposition agents, lubricants, pigments, expanding agents, solvents, and antifungal agents. One type of the various additives may be used alone, or two or more types thereof may be used in combination.

In some specific embodiments of the present invention, the curable composition of the present invention further contains calcium carbonate, a plasticizer, a small amount of an antioxidant, a thickener, and a dehydration agent, apart from the components (A) to (C).

### <Preparation of curable composition>

The component (A), the component (B), and the optionally added component (D) in accordance with an embodiment of the present invention is homogenously mixed by an ordinary method. Then, a solvent such as isobutyl alcohol is removed with use of an evaporator to obtain a polymer mixture. Subsequently, the polymer mixture is blended with another component to prepare a curable composition in accordance with an embodiment of the present invention.

The curable composition in accordance with an embodiment of the present invention may be prepared as a one-component curable composition in which the polymer mixture and other component(s) are mixed in advance, which is stored in a sealed state, and which cures at room temperature by moisture in the air after being applied. The curable composition may be prepared as a two-component curable composition in which a curing agent obtained by separately mixing components such as a curing catalyst, a filler, a plasticizer, and water in advance and a polymer composition are mixed with each other immediately before use. In terms of workability, the one-component curable composition is preferable.

In a case where the curable composition in accordance with an embodiment of the present invention is prepared as a one-component curable composition, it is preferable that moisture-containing components be dehydrated and dried prior to use, or be dehydrated during kneading by, for example, pressure reduction. In the case of dehydrating or drying solids such as powder, thermal drying or dehydration under reduced pressure is preferable. In the case of dehydrating or drying liquids, dehydration under reduced pressure or a method using a dehydration agent is preferable.

A method of preparing the curable composition in accordance with an embodiment of the present invention is not particularly limited. A normal method may be used, such as a method in which the above components are mixed and kneaded with use of e.g. a mixer, roller, or kneader, at normal temperature or while applying heat; and a method in which a small amount of a suitable solvent is used to dissolve the components, and the dissolved components are mixed together.

### <Cured product>

When the curable composition in accordance with an embodiment of the present invention is exposed to atmospheric air, the action of moisture in the atmospheric air causes a three-dimensional network-like structure to form in the curable composition, and the curable composition cures into a cured product having rubber-like elasticity.

### <Uses>

The curable composition in accordance with an embodiment of the present invention can be used for adhesive agents and the like, and can be used for e.g. a sealing material, a waterproofing material, an impression material, a vibration-proofing material, a damping material, a sound-proofing material, a foamed material, a coating material, and a spray coating material for architecture, ships, automobiles, roads, and the like. A cured product obtained by curing the curable composition in accordance with an embodiment of the present invention is excellent in mechanical performance and adhesiveness and therefore is more preferably used as, among the above materials, a sealing material or an adhesive agent. In particular, the curable composition can be used for an architectural or industrial elastic coating material having the function of sealing a gap and the function of linking an elastically joined joint and a crack, or can be used for protecting and/or sealing ceilings, floors, balconies, parking lots, or concrete pipes.

The present invention will be described below in further detail with reference to Comparative Examples and Synthesis Examples. However, the present invention is not limited to Examples below.

### (Examples)

Note that the number average molecular weights indicated below were measured by gel permeation chromatography (GPC) (HLC-8120GPC, Tosoh Corporation). The column used was a TSKgel H type (Tosoh Corporation). A tetrahydrofuran (THF) solution containing a polymer dissolved therein was prepared and subjected to measurement at 40°C. A number average molecular weight (Mn) was calculated as a standard polystyrene equivalent molecular weight.

Regarding the component (A), an average number of silicon-containing reactive groups per molecule was determined by a method in which protons of carbon directly bonded to a silicon-containing reactive group were quantified by a high-resolution ¹HNMR measurement method.

### <Preparation of component (A)>

### (Synthesis Example 1-1)

Propylene oxide was polymerized with use of (i) polypropylene glycol having a number average molecular weight of 3,000 as an initiator and (ii) a zinc hexacyanocobaltate glycol dimethyl ether complex catalyst as a catalyst. Thus obtained was polyoxypropylene which had hydroxy groups each being respectively provided at both terminals and had a number average molecular weight of 30,000. Subsequently, a methanol solution containing 1.2 molar equivalents of sodium methoxide with respect to the hydroxy groups of the polyoxypropylene was added. The methanol was removed by vacuum devolatilization, and then 1.3 molar equivalents of allyl chloride with respect to the hydroxy groups of the polyoxypropylene was added to the reaction solution to convert the hydroxy groups at the terminals to allyl groups. The resultant unrefined polyoxypropylene having the allyl groups at the terminals was mixed with n-hexane and water, and stirring was carried out. The water was then removed by centrifugal separation. The resultant hexane solution was subjected to devolatilization of hexane under reduced pressure to remove the metal salt in the polymer (polyoxypropylene). The resultant polyoxypropylene having allyl groups at the terminals were caused to react with trimethoxysilane in the presence of a platinum-based catalyst to obtain polyoxypropylene (MS-1) having trimethoxysilyl groups at the terminals and a number average molecular weight of 30,000. The (MS-1) had a hydrolyzable silyl group and contained 1.5 trimethoxysilyl groups on average per molecule.

### (Synthesis Example 1-2)

An operation similar to that of Synthesis Example 1-1 was carried out except that: polyoxypropylene triol having a number average molecular weight of 3,000 was used as an initiator; and the amount of propylene oxide used for adjustment of a molecular weight was changed. Polyoxypropylene (MS-2) having trimethoxysilyl groups at the terminals and a number average molecular weight of 29,000 was obtained. The (MS-2) had a hydrolyzable silyl group and contained 2.4 trimethoxysilyl groups on average per molecule.

### (Synthesis Example 1-3)

Propylene oxide was polymerized with use of (i) polypropylene glycol having a number average molecular weight of 3,000 as an initiator and (ii) a zinc hexacyanocobaltate glycol dimethyl ether complex catalyst as a catalyst. Thus obtained was polyoxypropylene which had hydroxy groups each being respectively provided at both terminals and had a number average molecular weight of 30,000. Subsequently, a methanol solution containing 1.2 molar equivalents of sodium methoxide with respect to the hydroxy groups of the polyoxypropylene was added. The methanol was removed by vacuum devolatilization, and then 1.0 molar equivalents of an allyl glycidyl ether with respect to the hydroxy groups of the polyoxypropylene was added to the reaction solution, and a resultant mixture was caused to react at 130°C for 2 hours. Then, a methanol solution containing 0.3 molar equivalents of sodium methoxide was added, the methanol was removed, and then 1.8 molar equivalents of allyl chloride was added to the reaction solution to convert the hydroxy groups at the terminals to allyl groups. The resultant unrefined polyoxypropylene having the allyl groups was mixed with n-hexane and water, and stirring was carried out. The water was then removed by centrifugal separation. The resultant hexane solution was subjected to devolatilization of hexane under reduced pressure to remove the metal salt in the polymer (polyoxypropylene). The resultant polyoxypropylene having allyl groups at the terminals were caused to react with trimethoxysilane in the presence of a platinum-based catalyst to obtain polyoxypropylene (MS-3) having trimethoxysilyl groups at the terminals and a number average molecular weight of 30,000. The (MS-3) had a hydrolyzable silyl group and contained 3.4 trimethoxysilyl groups on average per molecule.

### (Synthesis Example 1-4)

An operation similar to that of Synthesis Example 1-1 was carried out except that: polyoxypropylene triol and polypropylene glycol between which the number average molecular weight was 3,000 and a weight ratio was 1:1 was used as initiators; the amount of propylene oxide used for adjustment of a molecular weight was changed; and methyl dioxymethylsilane was used instead of trimethoxysilane. Polyoxypropylene (MS-4) having methyldioxymethylsilyl groups at the terminals and a number average molecular weight of 21,000 was obtained. The (MS-4) had a hydrolyzable silyl group and contained 1.8 methyldioxymethylsilyl groups on average per molecule.

### (Synthesis Example 1-5)

An operation similar to that of Synthesis Example 1-1 was carried out except that: the amount of propylene oxide used for adjustment of a molecular weight was changed; and methyl dioxymethylsilane was used instead of trimethoxysilane. Polyoxypropylene (MS-5) having methyldioxymethylsilyl groups at the terminals and a number average molecular weight of 26,000 was obtained. The (MS-5) had a hydrolyzable silyl group and contained 1.3 methyldioxymethylsilyl groups on average per molecule.

### (Synthesis Example 1-6)

An operation similar to that of Synthesis Example 1-1 was carried out except that: the amount of propylene oxide used for adjustment of a molecular weight was changed; and methyl dioxymethylsilane was used instead of trimethoxysilane. Polyoxypropylene (MS-6) having methyldioxymethylsilyl groups at the terminals and a number average molecular weight of 15,000 was obtained. The (MS-6) had a hydrolyzable silyl group and contained 1.6 methyldioxymethylsilyl groups on average per molecule.

### (Synthesis Example 1-7)

An operation similar to that of Synthesis Example 1-1 was carried out except that: the amount of propylene oxide used for adjustment of a molecular weight was changed. Polyoxypropylene (MS-7) having trimethoxysilyl groups at the terminals and a number average molecular weight of 15,000 was obtained. The (MS-7) had a hydrolyzable silyl group and contained 1.6 trimethoxysilyl groups on average per molecule.

### <Preparation of component (B)>

### (Synthesis Example 2-1)

To 200 g of isobutyl alcohol heated to 105°C, dropped over 4 hours was a mixed solution consisting of 350 g of methyl methacrylate, 100 g of 2-ethylhexyl acrylate, 50 g of 3-methylacryloyloxy propyltrimethoxysilane, 25 g of γ-mercaptopropyltrimethoxysilane, 100 g of isobutyl alcohol, and 12.5 g of azobisisobutyronitrile (polymerization initiator). Then, later polymerization was carried out for two hours. Thus obtained was a (meth)acrylic ester-based polymer (A-1) solution having a solid content concentration of approximately 60%. The number average molecular weight of the (A-1) measured by GPC was 2,500.

### (Synthesis Example 2-2)

An operation similar to that of Synthesis Example 2-1 was carried out except that: γ-mercaptopropyltrimethoxysilane was not added; and 350 g of methyl methacrylate, 100 g of 2-ethylhexyl acrylate, 25 g of 3-methylacryloyloxy propyltrimethoxysilane, and 10 g of γ-methylacryloyloxy propylmethyldimethoxysilane were used as monomers. Thus obtained was a (meth)acrylic ester-based polymer (A-2) solution. The number average molecular weight of the (A-2) measured by GPC was 2,800.

### (Synthesis Example 2-3)

An operation similar to that of Synthesis Example 2-1 was carried out except that: γ-mercaptopropyltrimethoxysilane was not added; 250 g of methyl methacrylate, 50 g of 2-ethylhexyl acrylate, 100 g of butyl acrylate, 50 g of stearyl methacrylate, and 35 g of γ-methylacryloyloxy propylmethyldimethoxysilane were used as monomers; and 13.5 g of azobisisobutyronitrile (polymerization initiator) was used. Thus obtained was a (meth)acrylic ester-based polymer (A-3) solution. The number average molecular weight of the (A-3) measured by GPC was 9,000.

### (Synthesis Example 2-4)

An operation similar to that of Synthesis Example 2-1 was carried out except that: γ-mercaptopropyltrimethoxysilane was not added; 50 g of methyl methacrylate, 350 g of butyl acrylate, 50 g of stearyl methacrylate, and 15 g of γ-methylacryloyloxy propylmethyldimethoxysilane were used as monomers; and 2.5 g of azobisisobutyronitrile (polymerization initiator) was used. Thus obtained was a (meth)acrylic ester-based polymer (A-4) solution. The number average molecular weight of the (A-4) measured by GPC was 18,000.

### (Synthesis Example 2-5)

An operation similar to that of Synthesis Example 2-1 was carried out except that: γ-mercaptopropyltrimethoxysilane was not added; 350 g of methyl methacrylate, 50 g of 2-ethylhexyl acrylate, 25 g of butyl acrylate, 50 g of stearyl methacrylate, and 30 g of γ-methylacryloyloxy propylmethyldimethoxysilane were used as monomers; and 15 g of azobisisobutyronitrile (polymerization initiator) was used. Thus obtained was a (meth)acrylic ester-based polymer (A-5) solution. The number average molecular weight of the (A-5) measured by GPC was 2,000.

### (Synthesis Example 2-6)

1,000 g of butyl acrylate was added to a 2,000-mL three-necked flask prepared.

To a stirring container separately prepared, 53 mg of copper bromide (CuBr₂), 54 mg of hexamethyltri(2-aminoethyl)amine (Me₆TREN), and 1.8 g of methanol were added, and were then stirred under a nitrogen gas stream until a homogeneous solution was obtained. This homogeneous solution is referred to as a copper solution.

To a stirring container separately prepared, 31 mL of methanol, 1.0 g of ascorbic acid, and 1.6 mL of triethylamine were added, and were then stirred under a nitrogen gas stream for 30 minutes to prepare a homogeneous solution referred to as an ascorbic acid solution.

### (First step)

To a stirring container, 5.8 g of ethyl α-bromobutyrate (initiator), 20 wt% of the butyl acrylate monomer described above, 14 g of 3-(trimethoxysilyl)propyl methacrylate, 152 g of methanol (available from Wako Pure Chemical Industries, Ltd.), and the all amount of the copper solution were added, and were then stirred under a nitrogen gas stream for 30 minutes to prepare a homogeneous solution. A jacket temperature was 45°C.

Then, when a temperature of a polymerization system became 40°C or higher, a polymerization reaction was initiated by continuously dripping the ascorbic acid solution. A dripping rate of the ascorbic acid solution was 144 mg/h.

Monitoring and measurement of the temperature of the polymerization system found that the temperature increased along with the start of the dripping of ascorbic acid, and after reaching the maximum temperature, the temperature gradually decreased. At the time when a temperature difference obtained by subtracting the jacket temperature from the temperature of the polymerization system became 1°C, the reaction solution in the polymerization system was sampled in a small amount and analyzed by gas chromatography. The analysis found that 90% by weight of the butyl acrylate monomer had been consumed.

### (Second step)

The butyl acrylate monomer remaining from the first step was dropped to a polymerization system over 150 minutes and analyzed by gas chromatography. As a result, polymerization was carried out until 94% by weight of the monomer was consumed.

### (Third step)

Then, 13 g of 3-(trimethoxysilyl)propyl methacrylate was added to the polymerization system. an ascorbic acid solution was continuously added over 1.5 hours, and the polymerization was completed.

The jacket temperature was changed to 80°C, and the solvent was caused to evaporate. After the evaporation, the jacket temperature was reduced down to 60°C or less.

### (Purification)

To a mixer including a jacket with a temperature adjustment function, 1,000 g of butyl acetate was added, and the polymer after the evaporation was mixed thereto, and a resultant mixture was stirred until a homogenous solution was obtained. An adsorbent was added to this homogeneous solution, and the resultant mixture was stirred for 1 hour. As the adsorbent, 10 g of Kyoward 500SH (available from Kyowa Chemical Industry Co., Ltd.) and 10 g of Kyoward 700SEN-S (available from Kyowa Chemical Industry Co., Ltd.) were used. After the stirring, the resultant mixture was filtered to obtain a supernatant solution of the polymer. Then, the solvent of the solution was caused to evaporate to obtain an acrylic acid-based polymer (A-6). The obtained (A-6) had a number average molecular weight of 38,000.

### <Preparation of polymer mixture>

In Example in which a component (A) ((MS-1) through (MS-7)) and a component (B) ((A-1) through (A-6)) are used in combination, a polymer mixture is obtained in advance by a method below, and then a curable composition is prepared.

The solution of the (meth)acrylic ester-based polymer obtained in Synthesis Example was homogenously mixed with the component (A) so that the (meth)acrylic ester-based polymer would have a weight in terms of solid content indicated in the tables. Then, isobutyl alcohol was removed with use of an evaporator to obtain a polymer mixture.

### (Examples 1 to 4 and Comparative Examples 1 to 8)

Under the conditions of 23°C and 50% RH (that is, 23°C and a relative humidity of 50%), a polymer mixture prepared by the above-described method was weighed in accordance with the parts by weight indicated in Table 1, and silane and a catalyst were added in parts by weight indicated in Table 1. These were mixed sufficiently. The resultant mixture was put in a small cup, and the surface of the mixture was touched at regular short time intervals, and the time taken until a surface skin was formed was measured as a curing time. The results are shown in Table 1.

### <Preparation of curable composition>

### (Examples 5 to 8 and Comparative Examples 9 to 11)

A component (A) and a component (B) were weighed in accordance with the weight ratios indicated in Table 2, and were homogenously mixed. Then, isobutyl alcohol was removed with use of an evaporator to obtain a polymer mixture.

100 parts by weight of the obtained polymer mixture was mixed sufficiently with a composition consisting of: 50 parts by weight of diisononyl phthalate serving as a plasticizer; 60 parts by weight of heavy calcium carbonate (product name: LM2200); 100 parts by weight of precipitable calcium carbonate (product name: 200A); and 1 parts by weight of an antioxidant (product name: Irganox 245).

The resultant mixture was dehydrated under reduced pressure at 120°C for 2 hours, so that the mixture was cooled to a temperature of 50°C or lower. Then, under the conditions of 23°C and 50% RH, 2 parts by weight of vinyltrimethoxysilane (product name: WD-21) and 2 parts by weight of N-β-(aminoethyl)-γ-aminopropyltrimethoxysilane (product name: WD-51) were added, and, finally, 2 parts by weight of tetramethylguanidine propyl trimethoxysilane (product name: N-GCF) was added as a curing catalyst, and a resultant mixture was kneaded to obtain a curable composition. The composition, which was in a state where substantially no moisture was present, was sealed in a moisture-proof barrel.

### (Comparative Examples 12 and 13)

An operation similar to those of Examples 5 to 8 was carried out except that, as a curing catalyst, tetramethylguanidine propyl trimethoxysilane was changed to 1,8-diazabicyclo[5.4.0]undeca-7-en (product name: DBU, available from San-Apro Ltd.) (abbreviated as "DBU" in the tables below) or a solution (45 wt% solution) obtained by dissolving phenylguanidine in a dipropylene glycol n-butyl ether (abbreviated as "PGF" in the tables below).

### (Evaluation of characteristics)

The curable compositions obtained in Examples 5 to 8 and Comparative Examples 9 to 13 were subjected to measurement of surface curing times of the curable compositions, measurement and evaluation of the tensile physical properties of cured products and the adhesiveness of the curable compositions, and inspection of whether or not a catalyst was precipitated. The results are shown in Table 2.

### <Surface curing time (SFT)>

Each curable composition was spread out with use of a spatula until the thickness of the curable composition was approximately 3 mm. A small spatula was brought into contact with the surface of the mixture at regular time intervals, and the time taken until the mixture no longer adhered to the spatula was checked and counted as a surface curing time.

### <Tensile physical properties>

A polyethylene mold form measuring 3 mm in thickness was filled with each curable composition, with care taken to avoid air bubbles getting into the curable composition. The curable composition was then caused to age at 23°C and 50% RH for 3 days, and then at 50°C for 4 days to obtain a cured product. In accordance with JIS K 6251, a dumbbell-shaped test sheet in size 7 was cut out from the cured product obtained, and a tensile test (a tensile speed of 200 mm/min, 23°C, and a relative humidity of 50%) was carried out to measure stress at 50% elongation, stress at 100% elongation (M50, M100), strength at break (TB), and elongation at break (%). The results are shown in Table 2.

### <Adhesiveness>

Under the conditions of 23°C and 50% RH, each curable composition was spread out on a base material (polycarbonate, an acrylic material, an aluminum material, and hard PVC) into a shape of a rectangle having a length of approximately 30 mm, a width of approximately 15 mm, and a thickness of approximately 10 mm. The curable composition was pressed so as to tightly bind to the base material. Under similar conditions, the curable composition was cured for 7 days, and then a test was conducted in which the cured product was manually peeled at an angle of 90°. CF represents 100% cohesive failure, and AF represents adhesive interfacial failure. CF 70% means that a 70% cohesive failure occurred.

### <Surface observation>

Each curable composition was cured at 23°C and 50% RH for 7 days to obtain a cured product. By visual observation, the cured product was inspected as to whether or not a catalyst was precipitated on the surface of the cured product.

**[Table 1]**

| | | Example 1 | Example 2 | Example 3 | Example 4 | Compar. Example 1 | Compar. Example 2 | Compar. Example 3 | Compar. Example 4 | Compar. Example 5 | Compar. Example 6 | Compar. Example 7 | Compar. Example 8 |
|---|---|---|---|---|---|---|---|---|---|---|---|---|---|
| Component (A) | MS-1 | 70 | - | - | - | | | - | | - | - | | |
| | MS-2 | - | - | 60 | - | - | - | - | - | - | - | - | - |
| | MS-3 | - | - | - | 60 | - | - | - | - | - | - | - | - |
| | MS-4 | - | 60 | - | - | - | - | - | - | - | - | 100 | 80 |
| | MS-5 | - | - | - | - | - | - | - | - | - | 70 | - | - |
| | MS-6 | - | - | - | - | 60 | 60 | - | - | - | - | - | - |
| | MS-7 | - | - | - | - | - | - | - | - | 100 | - | - | - |
| Component (B) | A-1 | 30 | - | 40 | 40 | - | - | - | - | - | - | - | - |
| | A-2 | - | 40 | - | - | - | - | - | - | - | - | - | - |
| | A-3 | - | - | - | - | - | - | - | - | - | - | - | 20 |
| | A-4 | - | - | - | - | - | - | - | - | - | 30 | - | - |
| | A-5 | - | - | - | - | 40 | 40 | | - | - | - | - | - |
| | A-6 | - | - | - | - | - | - | 100 | 100 | - | - | - | - |
| Silane | A-171 | 2 | 2 | 2 | 2 | 2 | 2 | 2 | 2 | 2 | 2 | 2 | 2 |
| | A1120 | 2 | 2 | 2 | 2 | 2 | 2 | 2 | 2 | 2 | 2 | 2 | 2 |
| Catalyst | N-GCF | 1 | 1 | 1 | 1 | 1 | 2 | 1 | 2 | 1 | 1 | 2 | 1 |
| Curing time | | 50 min | 49 min | 37 min | 39 min | 30 h to 45 h | 30 h to 45 h | 14 d | 14 d | 6 h to 21 h | Not cured | Not cured | Not cured |

**[Table 2]**

| | | Example 5 | Example 6 | Example 7 | Example 8 | Compar. Example 9 | Compar. Example 10 | Compar. Example 11 | Compar. - Example 12 | Compar. Example 13 |
|---|---|---|---|---|---|---|---|---|---|---|
| Component (A) | MS-1 | 70 | - | - | - | - | - | - | 70 | - |
| | MS-2 | - | - | 60 | - | - | - | - | - | - |
| | MS-3 | - | - | - | 60 | - | - | - | - | - |
| | MS-4 | - | 60 | - | - | - | - | - | - | - |
| | MS-5 | - | - | - | - | - | 70 | - | - | - |
| | MS-6 | - | - | - | - | 60 | - | - | - | - |
| | MS-7 | - | - | - | - | - | - | 100 | - | 100 |
| Component (B) | A-1 | 30 | - | 40 | 40 | - | - | - | 30 | - |
| | A-2 | - | 40 | - | - | - | - | - | - | - |
| | A-3 | - | - | - | - | - | - | - | - | - |
| | A-4 | - | - | - | - | - | 30 | - | - | - |
| | A-5 | - | - | - | - | 40 | - | - | - | - |
| | A-6 | - | - | - | - | - | - | - | - | - |
| Plasticizer | DINP | 50 | 50 | 50 | 50 | 50 | 50 | 50 | 50 | 50 |
| Heavy calcium carbonate | LM2200 | 60 | 60 | 60 | 60 | 60 | 60 | 60 | 60 | 60 |
| Precipitable calcium carbonate | 200A | 100 | 100 | 100 | 100 | 100 | 100 | 100 | 100 | 100 |
| Antioxidant | Irg245 | 1 | 1 | 1 | 1 | 1 | 1 | 1 | 1 | 1 |
| Silane | WD-21 | 2 | 2 | 2 | 2 | 2 | 2 | 2 | 2 | 2 |
| | WD-51 | 2 | 2 | 2 | 2 | 2 | 2 | 2 | 2 | 2 |
| Catalyst | N-GCF | 2 | 2 | 2 | 2 | 2 | 2 | 2 | - | - |
| | DBU | - | - | - | - | - | - | - | 2 | - |
| | PGF | - | - | - | - | - | - | - | - | 2 |
| Surface curing time (SFT) | | 38 min | 32 min | 39 min | 41 min | 4d | 7 d | 3 h to 15 h | 13 min | 40 min |
| Tensile physical properties (23°C, dumbbell-shaped test sheet) | M50 (MPa) | 0.62 | 0.45 | 1.16 | 1.14 | 0.24 | 0.29 | 0.48 | 0.38 | 0.52 |
| | M100 (MPa) | 0.88 | 0.71 | 1.7 | 1.71 | 0.4 | 0.48 | 0.74 | 0.58 | 0.79 |
| | TB (MPa) | 1.46 | 1.27 | 1.96 | 2.2 | 0.99 | 1.06 | 1.2 | 1.13 | 1.16 |
| | EB (MPa) | 316 | 327 | 159 | 199 | 528 | 376 | 262 | 478 | 250 |
| Adhesiveness (manual peeling test) | Polycarbonate | AF | AF | AF | AF | AF | AF | AF | AF | AF |
| | Acrylic material | CF | CF | CF | CF | CF | CF 70% | AF | CF | AF |
| | Aluminum material | CF | CF | CF | CF | CF | CF | CF | CF | CF |
| | Hard PVC | CF | CF | CF | CF | CF | CF | CF | AF | AF |
| Precipitation of catalyst | | Absent | Absent | Absent | Absent | Absent | Absent | Absent | Present | Absent |

As indicated from Tables 1 and 2, in a case where a curable composition contains a component (A), a specific component (B), and a catalyst suitable for the present invention, the curable composition does not have precipitation of a catalyst, has a significantly improved curing speed, has excellent tensile physical properties after being cured, and has excellent adhesiveness.

## Claims

1. A curable composition, comprising:
(A) a polyoxyalkylene-based polymer having a silicon-containing reactive group;
(B) a (meth)acrylic ester-based polymer having a trialkoxysilyl group; and
(C) a catalyst represented by the following general formula (1): 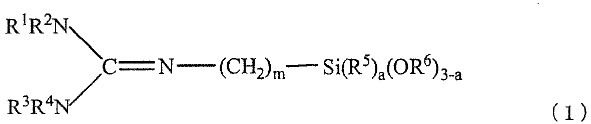 (where R¹ to R⁴ and R⁶ are each independently hydrogen or a substituted or unsubstituted alkyl group that has 1 to 20 carbon atoms, R⁵ is each independently a substituted or unsubstituted alkyl group having 1 to 20 carbon atoms, m is an integer of 2 to 5, and a is an integer of 0 to 2).

2. The curable composition according to claim 1, wherein the component (A) contains one or more silicon-containing reactive groups each represented by the following general formula (2):
-Si(R⁷)_{3-b}X_{b} (2)
(where R⁷ is each independently a substituted or unsubstituted alkyl group that has 1 to 20 carbon atoms, a substituted or unsubstituted aryl group that has 6 to 20 carbon atoms, a substituted or unsubstituted aralkyl group that has 7 to 20 carbon atoms, or a triorganosiloxy group represented by -OSi(R')₃, R' is each independently a substituted or unsubstituted alkyl group that has 1 to 20 carbon atoms, X each independently represents a hydroxy group or a hydrolyzable group, and b is an integer of 1 to 3).

3. The curable composition according to claim 1 or 2, wherein the component (A) contains not less than 1.1 silicon-containing reactive groups on average per molecule.

4. The curable composition according to claim 1 or 2, wherein R¹ to R⁶ are each independently an alkyl group that has 1 to 6 carbon atoms.

5. The curable composition according to claim 4, wherein R¹ to R⁶ are each independently a methyl group, an ethyl group, and/or a propyl group, and m is an integer of 2 to 4.

6. The curable composition according to claim 4, wherein the component (C) is one or more selected from the group consisting of tetramethylguanidine propyl trimethoxysilane, tetramethylguanidine propyl methyl dimethoxysilane, tetramethylguanidine propyl dimethyl methoxysilane, and tetramethylguanidine propyl triethoxysilane.

7. The curable composition according to claim 1 or 2, further optionally comprising a component (D), the component (D) being a (meth)acrylic ester-based polymer having a silicon-containing reactive group other than a trialkoxysilyl group, wherein
a content of the component (B) is not less than 18% with respect to a total mass of the component (A), the component (B), and the component (D).

8. A cured product obtained by curing a curable composition recited in any one of claims 1 to 7.

9. An adhesive agent, comprising a curable composition recited in any one of claims 1 to 7.

10. A sealing material, comprising a curable composition recited in any one of claims 1 to 7.
